# EUROPÄISCHE PATENTSCHRIFT

(11) **EP 3 090 236 B1**
(45) Veröffentlichungstag und Bekanntmachung des Hinweises auf die Patenterteilung: **07.02.2018**
(21) Anmeldenummer: 15738074.2
(22) Anmeldetag: 14.07.2015
(51) Int. Cl.: G01D 5/20, G01D 5/241

(54) **SENSORVORRICHTUNG ZUM BESTIMMEN EINER VERSCHIEBUNG EINER WELLE**
SENSOR FOR DETERMINING A LONGITUDINAL DISPLACEMENT OF AN AXIS
CAPTEUR POUR DÉTERMINER UN DÉPLACEMENT LONGITUDINAL D'UN AXE

(30) Priorität: 16.07.2014 DE 102014213869
(43) Veröffentlichungstag der Anmeldung: 09.11.2016
(73) Patentinhaber: Continental Automotive GmbH, 30165 Hannover (DE)
(72) Erfinder: WIESE, Peter, 65779 Kelkheim (DE)
(86) Internationale Anmeldenummer: PCT/EP2015/066035
(87) Internationale Veröffentlichungsnummer: WO 2016/008872

(56) Entgegenhaltungen:
- DE-A1- 19 804 414
- DE-A1-102005 029 904
- US-A1- 2005 046 415

## Beschreibung

Die Erfindung betrifft eine Sensorvorrichtung zum Bestimmen einer Verschiebung einer Welle entlang ihrer Longitudinalachse.

DE 697 07 536 T2 beschreibt eine Linearpositionserkennungsvorrichtung vom Induktionstyp, die auf der Basis der Erregung durch ein einphasiges Wechselstromsignal Wechselstromsignale erzeugt und ausgibt, welche mehrphasige Amplitudenfunktionscharakteristika in Reaktion auf eine zu erkennende Linearposition angeben. Hierzu weist die Linearpositionserkennungsvorrichtung einen zylindrisch geformten Wicklungsabschnitt sowie einen stangenförmigen variablen magnetischen Kopplungsabschnitt auf, der zwischen den Wicklungen des Wicklungsabschnitts mit einem geeigneten Abstand angeordnet ist.

DE 201 15 060 U1 beschreibt einen nockenwellenlosen Aktuator zur Betätigung eines Hubventils einer Brennkraftmaschine, mit einem oszillierend bewegten, mit dem Hubventil gekoppelten Stößel, wobei auf dem Außenumfang des Stößels ein wenigstens einfach geschlitzter, als separates, vorgefertigtes Teil ausgebildeter Targetring befestigt ist, der aus einem Werkstoff auf FE-Basis oder aus einem ferritischen Werkstoff besteht. Ein dem Stößel umgebender induktiv und bei niedrigen Frequenzen arbeitender Sensor ist für die Positionsbestimmung des Stößels vorgesehen.

DE 41 20 643 A1 betrifft eine Reibungskupplung für Kraftfahrzeuge mit einer zwischen zwei Bauteilen einspannbaren Kupplungsscheibe, die drehfest auf einer Getriebewelle sitzt, einer Kupplungsfeder zum Einspannen der Kupplungsscheibe zwischen die beiden Bauteile, einer Kupplungsbetätigungseinrichtung mit einer kupplungsnahen Nehmereinrichtung, einer kupplungsfernen Gebereinrichtung sowie einer dazwischen angeordneten Übertragungseinrichtung, wobei in einer kupplungsnahen Nehmereinrichtung ein Wegsensor angeordnet ist, welcher in oder am Nehmerzylinder angeordnet ist. Zum Zweck einer kapazitiven Erfassung eines Wegsignals ist ein Ringkolben an seinem Außenumfang mit einer elektrisch leitenden Beschichtung versehen. Der Ringkolben ist in einem Fortsatz aufgenommen, der mit der Beschichtung des Kolbens einen Kondensator bildet.

DE 10 2006 031 139 A1 betrifft eine Vorrichtung zum berührungslosen und verschleißfreien Messen der absoluten linearen Position mit planaren Spulen von Geräte-, Maschinen- oder Betätigungselementen im Bereich von 10 mm bis 200 mm, wobei dieses Element selbst die Funktion des Läufers darstellen kann. An zwei in einer Ebene differenziell angeordneten planaren Dreiecksspulen werden die Verluste des elektromagnetischen Felds gemessen, die durch Wirbelströme im Läufer entstehen. Diese Verluste sind proportional zu der vom Läufer überdeckten Fläche der Dreiecksspulen und damit proportional zur absoluten Position. In einer zweiten Ebene wird ein zweites Spulenpaar angeordnet, womit Änderungen des Abstands des Läufers ausgeglichen werden.

DE 10 2013 214 358 A1 betrifft eine Messvorrichtung für ein manuelles Schaltgetriebe zum Erfassen der Position einer Schaltwelle relativ zu einem Gehäuse umfassend eine Sensoranordnung und ein Sensortarget, wobei die Sensoranordnung einen induktiven Sensor umfasst, mittels dessen eine Erfassung eines Abstandes zwischen dem induktiven Sensor und dem Sensortarget erfolgt, und das Sensortarget aus einem leitenden Material gefertigt ist, wobei die Form des Sensortargets derart gestaltet ist, dass der Abstand zwischen dem induktiven Sensor und dem Sensortarget in Abhängigkeit der Position der Schaltwelle relativ zum Gehäuse variiert.

US 4 623 840 A beschreibt einen Aktuator, welcher einen zylindrischen Körper umfasst, auf dessen äußeren Oberfläche eine Spule geformt ist, und ein Kolben in dem Körper angeordnet ist, welcher als Kern dient. Eine Verschiebung des Kolbens kann mittels einer Detektionsschaltung detektiert werden durch eine Veränderung der Spuleninduktion infolge der Verschiebung des Kolbens. DE 198 04 414 A1 beschreibt eine weitere Sensorvorrichtung zum Bestimmen einer longitudinalen Verschiebung einer Welle, wobei eine Verkippung oder eine Exzentrizität der Welle in der Auswerteelektronik kompensiert wird.

Die Aufgabe der Erfindung ist es, eine Sensorvorrichtung zum Bestimmen einer Verschiebung einer Welle entlang ihrer Longitudinalachse zu schaffen, die eine hohe Präzision und Zuverlässigkeit der Bestimmung der Verschiebung ermöglicht.

Die Aufgabe wird gelöst durch die Merkmale des unabhängigen Patentanspruchs. Vorteilhafte Weiterbildungen sind in den Unteransprüchen gekennzeichnet.

Gemäß einem ersten Aspekt zeichnet sich die Erfindung aus durch eine Sensorvorrichtung zum Bestimmen einer Verschiebung einer Welle entlang ihrer Longitudinalachse, die eine Sensoreinheit umfasst, die radial in einem ersten Abstand zu der Longitudinalachse angeordnet ist. Die Welle ist relativ verschiebbar zu der Sensoreinheit entlang der Longitudinalachse. Die Sensorvorrichtung umfasst ferner ein Detektionselement, das zwischen der Welle und der Sensoreinheit angeordnet ist. Das Detektionselement ist radial in einem zweiten Abstand zu der Longitudinalachse fix mit der Welle gekoppelt. Eine der Longitudinalachse abgewandte Seite des Detektionselements ist bezogen auf eine Ebene senkrecht zu der Longitudinalachse konvex ausgebildet, derart, dass eine Spaltdistanz zwischen dem Detektionselement und der Sensoreinheit über eine Erstreckung der Sensoreinheit senkrecht zu der Longitudinalachse unabhängig von einem Kippwinkel der Welle variiert.

Die Sensoreinheit ist ausgebildet, ein Wellenverschiebungssignal zu erzeugen, das abhängig ist von einer Verschiebung des Detektionselements relativ zu der Sensoreinheit entlang der Longitudinalachse.

Eine konvexe Ausbildung des Detektionselements hat den Vorteil, dass ein Einfluss eines Kippwinkels der Welle auf ein durch eine Überlappung des Detektionselements mit einem beliebigen Teilbereich der Sensoreinheit eingeschlossenes Volumen gering ist im Vergleich zu einer ebenen Ausführung des Detektionselements. Auf diese Weise wird eine hohe Präzision und Zuverlässigkeit der Bestimmung der Verschiebung ermöglicht. Durch eine hohe Präzision der Sensorvorrichtung auch bei einem Kippen der Welle um den Kippwinkel ist beispielsweise eine kippwinkelbegrenzende Führung der Welle lediglich optional. Dadurch kann zum Beispiel eine runde Welle eingesetzt werden, so dass zu einer einfachen und kostengünstigen Herstellung der Sensorvorrichtung beigetragen wird. Ferner trägt eine Verfügbarkeit von Lagern mit wirksamer Abdichtung gegenüber Umgebungsmedien bei runden Wellen zu einer hohen Zuverlässigkeit der Sensorvorrichtung bei.

Das Wellenverschiebungssignal repräsentiert so die Verschiebung der Welle bezüglich der Sensoreinheit entlang der Longitudinalachse. Das Wellenverschiebungssignal ist insbesondere genauer zu einer tatsächlichen Verschiebung als bei einer nichtkonvexen Ausbildung des Detektionselements.

In einer vorteilhaften Ausgestaltung gemäß dem ersten Aspekt ist eine Krümmung der der Longitudinalachse abgewandten Seite des Detektionselements in der Ebene senkrecht zu der Longitudinalachse im Wesentlichen gleich einer Krümmung eines Kreises in dieser Ebene ausgebildet, dessen Radius dem zweiten Abstand des Detektorelements zu der Longitudinalachse entspricht.

Die konvexe Ausbildung des Detektionselements mit einer im Wesentlichen rotationssymmetrischen Oberflächenkrümmung um die Longitudinalachse hat den Vorteil, dass ein durch die Überlappung des Detektionselements mit dem beliebigen Teilbereich der Sensoreinheit eingeschlossenes Volumen im Wesentlichen unabhängig von einem Kippwinkel der Welle ist, sodass eine hohe Präzision und Zuverlässigkeit der Bestimmung der Verschiebung ermöglicht wird.

In einer weiteren vorteilhaften Ausgestaltung gemäß dem ersten Aspekt ist das Detektionselement als Plättchen ausgebildet.

Im Falle, dass das Plättchen einem Magnetfeld ausgesetzt ist, ist eine Dämpfung, die das Magnetfeld durch das Plättchen erfährt, repräsentativ für die Verschiebung des Detektionselements bezüglich der Sensoreinheit.

Zusätzlich ist beispielsweise eine transformatorische Rückwirkung repräsentativ für die Verschiebung des Detektionselements bezüglich der Sensoreinheit. Dadurch wird ein einfaches Bestimmen der Verschiebung der Welle entlang ihrer Longitudinalachse ermöglicht.

Das Plättchen ist dazu beispielsweise aus einem leitfähigen Material ausgebildet.

In einer weiteren vorteilhaften Ausgestaltung gemäß dem ersten Aspekt ist das Detektionselement als Leiterschleife ausgebildet.

Im Falle, dass die Leiterschleife einem Magnetfeld ausgesetzt ist, ist eine transformatische Rückwirkung repräsentativ für die Verschiebung des Detektionselements bezüglich der Sensoreinheit. Dadurch wird ein einfaches Bestimmen der Verschiebung der Welle entlang ihrer Longitudinalachse ermöglicht.

Die Leiterschleife ist dazu beispielsweise aus einem leitfähigen Material derart ausgebildet, dass ein Leiter der Leiterschleife zumindest einen Teilbereich des Detektionselements umrandet.

In einer weiteren vorteilhaften Ausgestaltung gemäß dem ersten Aspekt umfasst die Sensoreinheit eine Erregerspule und mindestens eine Empfängerspule. Die Erregerspule und die mindestens eine Empfängerspule sind derart ausgebildet, dass ein durch die Erregerspule erzeugtes magnetisches Feld abhängig von der Verschiebung des Detektionselements bezüglich der Sensoreinheit eine jeweilige Spannung in der mindestens einen Empfängerspule induziert.

Eine derartige Anordnung ermöglicht ein kostengünstiges und präzises Bestimmen der Verschiebung der Welle entlang ihrer Longitudinalachse.

Die Sensoreinheit ist ausgebildet, abhängig von der jeweiligen Spannung das Wellenverschiebungssignal zu erzeugen.

In einer weiteren vorteilhaften Ausgestaltung gemäß dem ersten Aspekt ist das Detektionselement als Permanentmagnet ausgebildet. Die Sensoreinheit umfasst einen Hall-Sensor, der abhängig von der Verschiebung des Permanentmagneten bezüglich der Sensoreinheit von einem durch den Permanentmagneten hervorgerufenen Magnetfeld durchsetzt ist.

Eine derartige Ausbildung hat den Vorteil, dass zur Bestimmung der Verschiebung der Welle entlang ihrer Longitudinalachse lediglich das Bestimmen des Magnetfelds des Permanentmagneten erforderlich ist, so dass zu einer einfachen Herstellung der Sensorvorrichtung beigetragen wird.

Die Sensoreinheit ist ausgebildet, abhängig von der Hall-Spannung des Hall-Sensors das Wellenverschiebungssignal zu erzeugen.

In einer weiteren vorteilhaften Ausgestaltung gemäß dem ersten Aspekt ist das Detektionselement als Permanentmagnet ausgebildet. Die Sensoreinheit umfasst ein magneto-resistives Sensorelement, das abhängig von der Verschiebung des Permanentmagneten bezüglich der Sensoreinheit von einem durch den Permanentmagneten hervorgerufenen Magnetfeld durchsetzt ist.

Eine derartige Ausbildung hat den Vorteil, dass zur Bestimmung der Verschiebung der Welle entlang ihrer Longitudinalachse lediglich das Bestimmen des Magnetfelds des Permanentmagneten erforderlich ist, so dass zu einer einfachen platzsparenden Herstellung der Sensorvorrichtung beigetragen wird.

Die Sensoreinheit ist ausgebildet, abhängig von einem elektrischen Widerstand des magneto-resistiven Sensorelements das Wellenverschiebungssignal zu erzeugen.

Das magneto-resistive Sensorelement ist beispielsweise als anisotroper Magnetwiderstand (AMR), als Riesenmagnetowiderstand (GMR), oder als magnetischer Tunnelwiderstand (TMR) ausgebildet.

In einer weiteren vorteilhaften Ausgestaltung gemäß dem ersten Aspekt ist das Detektionselement als mindestens eine erste Elektrode eines Kondensators ausgebildet. Die Sensoreinheit umfasst mindestens eine zweite Elektrode des Kondensators.

Die Sensoreinheit ist ausgebildet, abhängig von einer Kapazität des Kondensators das Wellenverschiebungssignal zu erzeugen.

Gemäß einem zweiten Aspekt zeichnet sich die Erfindung aus durch ein Abgasrückführungsventil, das zur Steuerung eines Abgasflusses im Abgasstrang einer Brennkraftmaschine angeordnet ist.

Das Abgasrückführungsventil umfasst einen Einlass sowie einen Auslass.

Ferner umfasst das Abgasrückführungsventil einen Ventilsitz mit einem Ventilteller, der mit einer als Ventilstange ausgebildeten Welle gekoppelt ist, so dass dessen Position bezüglich des Ventilsitzes durch eine Verschiebung der Welle entlang ihrer Longitudinalachse einstellbar ist.

Das Abgasrückführungsventil ist dazu ausgebildet, den Abgasfluss von dem Einlass zu dem Auslass abhängig von der Position des Ventiltellers bezüglich des Ventilsitzes zu steuern.

Das Abgasrückführungsventil umfasst ferner eine Sensorvorrichtung zum Bestimmen der Verschiebung der Welle gemäß dem ersten Aspekt.

Durch die präzise und zuverlässige Bestimmung der Verschiebung der Welle und die dadurch ermöglichte präzise Abgasrückführung wird zu einem effizienten Betrieb der Brennkraftmaschine beigetragen.

Ausführungsbeispiele der Erfindung sind im Folgenden anhand der schematischen Zeichnungen erläutert. Es zeigen:
- Figur 1: eine Frontansicht eines ersten Ausführungsbeispiels einer Sensorvorrichtung zum Bestimmen einer Verschiebung einer Welle entlang ihrer Longitudinalachse,
- Figur 2: die Sensorvorrichtung gemäß Figur 1 in einer Draufsicht,
- Figur 3: eine Frontansicht eines zweiten Ausführungsbeispiels einer Sensorvorrichtung zum Bestimmen der Verschiebung der Welle entlang ihrer Longitudinalachse,
- Figur 4: die Sensorvorrichtung gemäß Figur 3 in einer Draufsicht und
- Figur 5: eine Draufsicht eines dritten Ausführungsbeispiels einer Sensorvorrichtung zum Bestimmen der Verschiebung der Welle entlang ihrer Longitudinalachse.

Elemente gleicher Konstruktion oder Funktion sind figurenübergreifend mit den gleichen Bezugszeichen versehen.

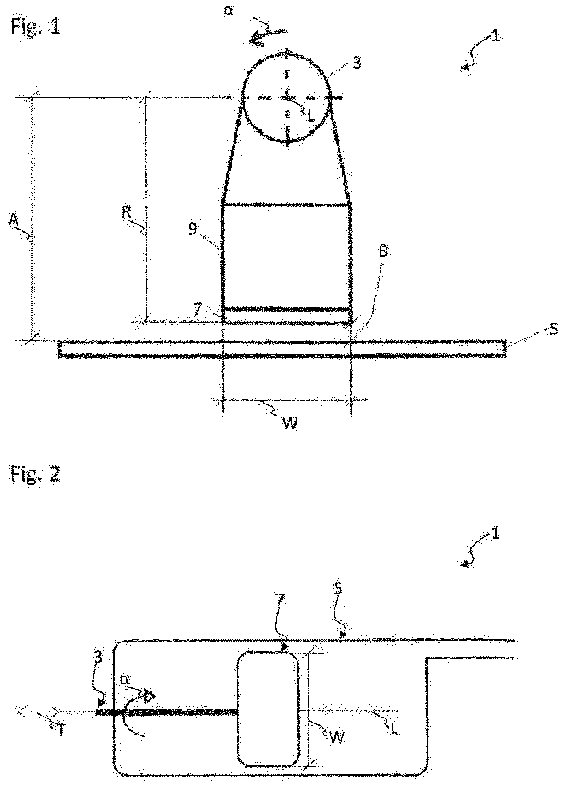

Figur 1 und Figur 2 zeigen jeweils eine Sensorvorrichtung 1 zum Bestimmen einer Verschiebung T einer Welle 3 entlang ihrer Longitudinalachse L aus unterschiedlichen Perspektiven. In Figur 1 ist eine Frontansicht der Sensorvorrichtung 1 dargestellt, mit der Longitudinalachse L senkrecht zur Bildebene.

Die Sensorvorrichtung 1 umfasst zum Bestimmen der Verschiebung T der Welle 3 in einem ersten Abstand A radial zu der Longitudinalachse L eine Sensoreinheit 5. Beispielsweise ist eine der Longitudinalachse L zugewandte Seite der Sensoreinheit 5 bezogen auf eine Ebene senkrecht zu der Longitudinalachse L tangential zu einem Kreis angeordnet, dessen Radius dem ersten Abstand A entspricht.

Zwischen der Sensoreinheit 5 und der Welle 3 ist ferner ein Detektionselement 7 angeordnet, das in einem zweiten Abstand R radial zu der Longitudinalachse L beispielsweise mit einem Kopplungselement 9 fix mit der Welle gekoppelt ist. Das Kopplungselement 9 ist beispielsweise als Kunststoffdom ausgebildet, der die Welle 3 von dem Detektionselement 7 beispielsweise elektrisch entkoppelt.

Beispielsweise weist das Detektionselement 7 an seiner der Longitudinalachse L zugewandten Seite mindestens eine Ausnehmung auf, die zu einer formschlüssigen Kopplung mit dem Kopplungselement 9 ausgebildet ist. Zu diesem Zweck ist das Detektionselement 7 beispielsweise auf dem Kopplungselement 9 umspritzt.

In einer Neutralstellung der Welle 3, beispielsweise im Falle, dass in der Ebene senkrecht zu der Longitudinalachse L eine Achse durch einen Mittelpunkt des Detektionselements 7 und die Longitudinalachse L senkrecht auf der Sensoreinheit 5 steht, beziehungsweise ein Kippwinkel α der Welle 3 zwischen dieser Achse und einer Oberflächennormalen der Sensoreinheit 5 Null Grad beträgt, ist das Detektionselement 7 beispielsweise parallel zu der Sensoreinheit 5 angeordnet.

Eine Spaltdistanz B zwischen einer der Longitudinalachse L abgewandten Seite des Detektionselements 7 und der der Longitudinalachse L zugewandten Seite der Sensoreinheit 5 ist in der Ebene senkrecht zu der Longitudinalachse L in einem Bereich W einer Überlappung des Detektionselements 7 in Neutralstellung der Welle 3 und der Sensoreinheit 5 konstant.

Figur 2 zeigt die Sensorvorrichtung 1 gemäß dem ersten Ausführungsbeispiel in einer Draufsicht, mit der Longitudinalachse L parallel zu der Bildebene. Die Sensoreinheit 5 ist dazu ausgebildet, ein Wellenverschiebungssignal zu erzeugen, das abhängig ist von einer Verschiebung des Detektionselements 7 relativ zu der Sensoreinheit 5 entlang der Longitudinalachse L. In der Neutralstellung der Welle 3 repräsentiert das Wellenverschiebungssignal die Verschiebung T der Welle 3 bezüglich der Sensoreinheit 5 entlang der Longitudinalachse L.

Beispielsweise durch Vibrationen oder ein Kippen der Sensorvorrichtung 1 kann der Kippwinkel α der Welle 3 einen von Null verschiedenen Wert annehmen. In diesem Fall ist die Spaltdistanz B zwischen der der Longitudinalachse L abgewandten Seite des Detektionselements 7 und der der Longitudinalachse L zugewandten Seite der Sensoreinheit 5 in dem Bereich W abhängig von dem Kippwinkel α. Insbesondere ist das Wellenverschiebungssignal so beispielsweise mit einem Messfehler behaftet.

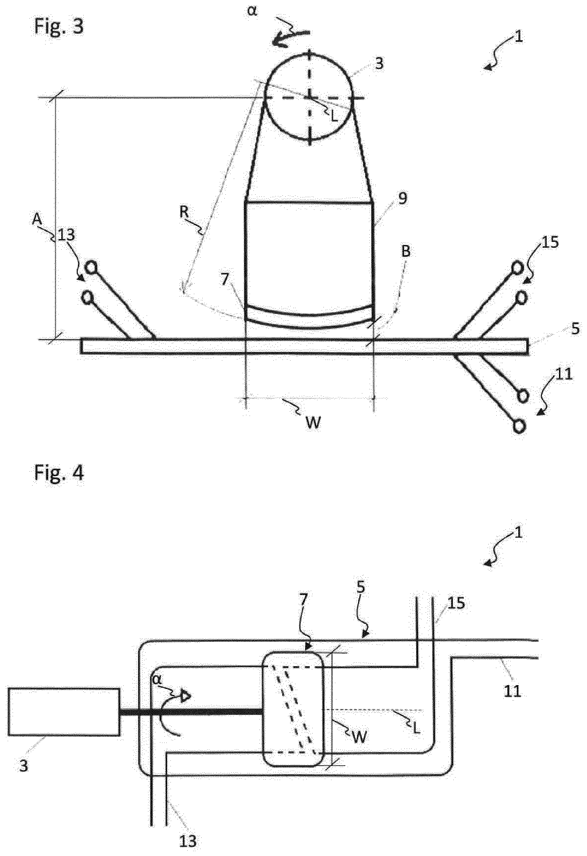

Ein zweites Ausführungsbeispiel (Figur 3) unterscheidet sich von dem ersten Ausführungsbeispiel gemäß Figur 1 daher durch eine Ausbildung des Detektionselements 7. Das Detektionselement 7 ist an seiner der Longitudinalachse L abgewandten Seite bezogen auf die Ebene senkrecht zu der Longitudinalachse L konvex ausgebildet. Insbesondere ist eine Krümmung der der Longitudinalachse L abgewandten Seite des Detektionselements in der Ebene senkrecht zu der Longitudinalachse L gleich einer Krümmung eines Kreises in dieser Ebene, dessen Radius den zweiten Abstand R des Detektionselements 7 zu der Longitudinalachse L entspricht. In vorteilhafter Weise ist so in dem Bereich W die Spaltdistanz B unabhängig von dem Kippwinkel α.

Das Detektionselement 7 ist beispielsweise als leitendes Plättchen ausgebildet. Die Sensoreinheit 5 umfasst beispielsweise eine Erregerspule 11, sowie zwei Empfängerspulen 13, 15, die beispielsweise auf eine Leiterplatte aufgedruckt sind.

Beispielsweise wird die Erregerspule 11 von einem Wechselstrom durchflossen. Ein durch die Erregerspule 11 erzeugtes magnetisches Feld erfährt abhängig von der Verschiebung des Detektionselements 7 eine Dämpfung, beispielsweise infolge von Wirbelströmen in dem Plättchen. Mittels den Empfängerspulen 13, 15, in denen jeweils durch das durch die Erregerspule 11 erzeugte magnetische Feld eine Spannung induziert wird, wird das Wellenverschiebungssignal erzeugt.

Beispielsweise zur Kompensation einer Verschiebung der Welle 3 in der Ebene senkrecht zu der Longitudinalachse L weist jeweils ein Leiter der Empfängerspulen 13, 15 in dem Bereich W in einer Ebene parallel der Sensoreinheit 5 gleichzeitig eine Komponente senkrecht zu der Longitudinalachse L sowie eine Komponente parallel zu der Longitudinalachse L auf (Figur 4).

In vorteilhafter Weise kann so beispielsweise durch ein Differenzsignal der Empfängerspulen 13, 15 das Wellenverschiebungssignal zudem mit besonders hoher Auflösung ermittelt werden. Insbesondere durch die konvex ausgebildete Seite des Detektionselements 7 wird eine derartige Ausbildung der Leiter der Empfängerspulen 13, 15 und damit ein präzises Bestimmen der Verschiebung T im Wesentlichen unabhängig von dem Kippwinkel α der Welle 3 ermöglicht.

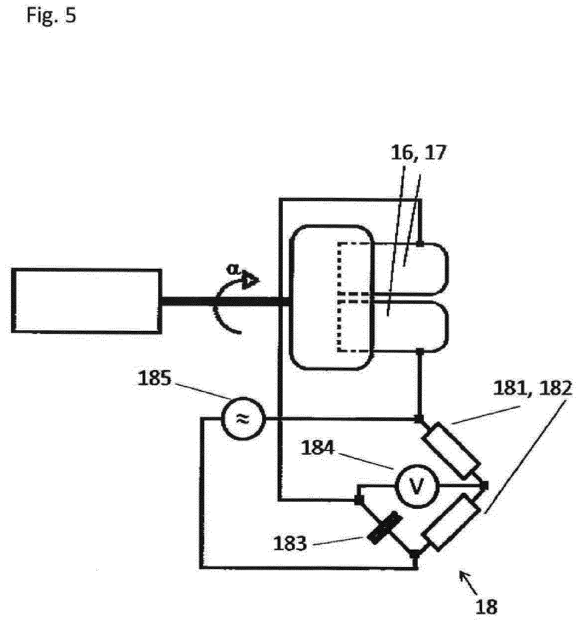

Ein drittes Ausführungsbeispiel (Figur 5) unterscheidet sich von dem zweiten Ausführungsbeispiel dadurch, dass die Sensoreinheit mit zwei Elektrodenflächen 16, 17 ausgebildet ist. Diese sind über das als leitfähiges Plättchen ausgebildete Detektionselement 7 kapazitiv gekoppelt und bilden eine von der Verschiebung des Detektionselements 7 relativ zu der Sensoreinheit 5 entlang der Longitudinalachse L abhängige Kapazität. In Verbindung mit Brückenelementen 181, 182, 183 ergibt sich eine Vollbrücke 18, deren mittels Spannungsmesser 184 messbare Diagonalspannung abhängig ist von der Verschiebung des Detektionselements 7, wobei die Brückenelemente 181, 182 jeweils als Widerstand ausgebildet sind und eine Widerstandshalbbrücke ergeben und das Brückenelement 183 als Festwert-Kapazität ausgebildet ist. Zusätzlich ist eine Brückenversorgung 185 mit der Vollbrücke 18 gekoppelt.

Dies hat den Vorteil, dass das Detektionselement 7 nicht elektrisch kontaktiert werden muss und somit keine bewegten Leitungen verbaut werden müssen. Ferner ist das Detektionselement 7 an seiner der Longitudinalachse L abgewandten Seite bezogen auf die Ebene senkrecht zu der Longitudinalachse L konvex ausgebildet, so dass die Diagonalspannung die Verschiebung T der Welle 3 bezüglich der Sensoreinheit 5 entlang der Longitudinalachse L im Wesentlichen unabhängig von dem Kippwinkel α repräsentiert. Abhängig von einer Dimensionierung der Brückenelemente 181, 182, 183 hat die Diagonalspannung nur einen vernachlässigbaren Offset der Amplitude, was eine fehlerarme Weiterverarbeitung, beispielsweise mittels Differenzverstärker ermöglicht.

## Patentansprüche

1. Sensorvorrichtung (1) zum Bestimmen einer Verschiebung (T) einer Welle (3) entlang ihrer Longitudinalachse (L), umfassend
- eine Sensoreinheit (5), die radial in einem ersten Abstand (A) zu der Longitudinalachse (L) angeordnet ist, wobei die Welle (3) relativ verschiebbar ist zu der Sensoreinheit (5) entlang der Longitudinalachse (L),
- ein Detektionselement (7), das zwischen der Welle (3) und der Sensoreinheit (5) angeordnet und radial in einem zweiten Abstand (R) zu der Longitudinalachse (L) fix mit der Welle (3) gekoppelt ist, wobei eine der Longitudinalachse (L) abgewandte Seite des Detektionselements (7) bezogen auf eine Ebene senkrecht zu der Longitudinalachse (L) konvex ausgebildet ist, derart, dass eine Spaltdistanz (B) zwischen dem Detektionselement (7) und der Sensoreinheit (5) über eine Erstreckung der Sensoreinheit (5) senkrecht zu der Longitudinalachse (L) unabhängig von einem Kippwinkel (α) der Welle (3) variiert,
- die Sensoreinheit (5) ausgebildet ist ein Wellenverschiebungssignal zu erzeugen, das abhängig ist von einer Verschiebung des Detektionselements (7) relativ zu der Sensoreinheit (5) entlang der Longitudinalachse (L) .

2. Sensorvorrichtung (1) nach Anspruch 1, bei der eine Krümmung der der Longitudinalachse (L) abgewandten Seite des Detektionselements (7) in der Ebene senkrecht zu der Longitudinalachse (L) im Wesentlichen gleich einer Krümmung eines Kreises in dieser Ebene ausgebildet ist, dessen Radius dem zweiten Abstand (R) des Detektorelements (7) zu der Longitudinalachse (L) entspricht.

3. Sensorvorrichtung (1) nach einem der vorstehenden Ansprüche, bei der das Detektionselement (7) als Plättchen ausgebildet ist.

4. Sensorvorrichtung (1) nach einem der vorstehenden Ansprüche 1 oder 2, bei der das Detektionselement (7) als Leiterschleife ausgebildet ist.

5. Sensorvorrichtung (1) nach einem der vorstehenden Ansprüche, bei der die Sensoreinheit (5) eine Erregerspule (11) und mindestens eine Empfängerspule (13, 15) umfasst, wobei die Erregerspule (11) und die mindestens eine Empfängerspule (13, 15) derart ausgebildet sind, dass ein durch die Erregerspule (11) erzeugtes magnetisches Feld abhängig von der Verschiebung des Detektionselements (7) bezüglich der Sensoreinheit (5) eine jeweilige Spannung in der mindestens einen Empfängerspule (13, 15) induziert.

6. Sensorvorrichtung (1) nach einem der vorstehenden Ansprüche 1 bis 2, bei der
- das Detektionselement (7) als Permanentmagnet ausgebildet ist und
- die Sensoreinheit (5) einen Hall-Sensor umfasst, der abhängig von der Verschiebung des Permanentmagnets bezüglich der Sensoreinheit (5) von einem durch den Permanentmagneten hervorgerufenen Magnetfeld durchsetzt ist.

7. Sensorvorrichtung (1) nach einem der vorstehenden Ansprüche 1 bis 2, bei der
- das Detektionselement (7) als Permanentmagnet ausgebildet ist und
- die Sensoreinheit (5) ein magneto-resistives Sensorelement umfasst, das abhängig von der Verschiebung des Permanentmagnets bezüglich der Sensoreinheit (5) von einem durch den Permanentmagneten hervorgerufenen Magnetfeld durchsetzt ist.

8. Sensorvorrichtung (1) nach einem der vorstehenden Ansprüche 1 bis 2, bei der
- das Detektionselement (7) als mindestens eine erste Elektrode eines Kondensators ausgebildet ist und
- die Sensoreinheit (5) mindestens eine zweite Elektrode des Kondensators umfasst.

9. Abgasrückführungsventil, das zur Steuerung eines Abgasflusses im Abgasstrang einer Brennkraftmaschine angeordnet ist, umfassend
- einen Einlass sowie einen Auslass,
- einen Ventilsitz mit einem Ventilteller, der mit einer als Ventilstange ausgebildeten Welle (3) gekoppelt ist, so dass dessen Position bezüglich des Ventilsitzes durch eine Verschiebung (T) der Welle (3) entlang ihrer Longitudinalachse (L) einstellbar ist, wobei das Abgasrückführungsventil dazu ausgebildet ist, den Abgasfluss von dem Einlass zu dem Auslass abhängig von der Position des Ventiltellers bezüglich des Ventilsitzes zu steuern, und
- eine Sensorvorrichtung (1) nach einem der vorstehenden Ansprüche 1 bis 8 zum Bestimmen der Verschiebung (T) der Welle (3).

## Claims

1. Sensor device (1) for determining a displacement (T) of a shaft (3) along its longitudinal axis (L), comprising
- a sensor unit (5) which is radially arranged at a first distance (A) from the longitudinal axis (L), wherein the shaft (3) can be displaced in relation to the sensor unit (5) along the longitudinal axis (L),
- a detection element (7) which is arranged between the shaft (3) and the sensor unit (5) and is fixedly coupled to the shaft (3) radially at a second distance (R) from the longitudinal axis (L), wherein a side of the detection element (7) facing away from the longitudinal axis (L) is convex with respect to a plane perpendicular with respect to the longitudinal axis (L), in such a way that a gap distance (B) between the detection element (7) and the sensor unit (5) varies over an extent of the sensor unit (5) perpendicularly with respect to the longitudinal axis (L) and independently of a tilting angle (α) of the shaft (3),
- the sensor unit (5) is designed to generate a shaft displacement signal which is dependent on a displacement of the detection element (7) in relation to the sensor unit (5) along the longitudinal axis (L).

2. Sensor device (1) according to Claim 1, in which a curvature of the side of the detection element (7) which faces away from the longitudinal axis (L) is embodied in the plane perpendicular to the longitudinal axis (L) so as to be essentially equal to a curvature of a circle in this plane, the radius of which circle corresponds to the second distance (R) of the detector element (7) from the longitudinal axis (L).

3. Sensor device (1) according to one of the preceding claims, in which the detection element (7) is embodied as a lamellar.

4. Sensor device (1) according to one of the preceding Claims 1 or 2, in which the detection element (7) is embodied as a conductor loop.

5. Sensor device (1) according to one of the preceding claims in which the sensor unit (5) comprises an exciter coil (11) and at least one receiver coil (13, 15), wherein the exciter coil (11) and the at least one receiver coil (13, 15) are embodied in such a way that a magnetic field which is generated by the exciter coil (11) induces a respective voltage in the at least one receiver coil (13, 15) as a function of the displacement of the detection element (7) with respect to the sensor unit (5).

6. Sensor device (1) according to one of the preceding Claims 1 to 2, in which
- the detection element (7) is embodied as a permanent magnet, and
- the sensor unit (5) comprises a Hall sensor which is penetrated, as a function of the displacement of the permanent magnet with respect to the sensor unit (5), by a magnetic field which is brought about by the permanent magnet.

7. Sensor device (1) according to one of the preceding Claims 1 to 2, in which
- the detection element (7) is embodied as a permanent magnet, and
- the sensor unit (5) comprises a magneto-resistive sensor element which is penetrated, as a function of the displacement of the permanent magnet with respect to the sensor unit (5), by a magnetic field which is brought about by the permanent magnet.

8. Sensor device (1) according to one of the preceding Claims 1 to 2, in which
- the detection element (7) is embodied as at least a first electrode of a capacitor, and
- the sensor unit (5) comprises at least a second electrode of the capacitor.

9. Exhaust gas recirculation valve which is arranged in the exhaust gas train of an internal combustion engine in order to control an exhaust gas flow, comprising
- an inlet and an outlet,
- a valve seat with a valve disk which is coupled to a shaft (3) embodied as a valve rod, with the result that the position of said valve disk with respect to the valve seat can be adjusted by means of a displacement (T) of the shaft (3) along its longitudinal axis (L), wherein the exhaust gas recirculation valve is designed to control the exhaust gas flow from the inlet to the outlet as a function of the position of the valve disk with respect to the valve seat, and
- a sensor device (1) according to one of the preceding Claims 1 to 8 for determining the displacement (T) of the shaft (3) .

## Revendications

1. Dispositif de capteur (1) destiné à la détermination d'un déplacement (T) d'un arbre (3) le long de son axe longitudinal (L), comprenant :
- une unité de capteur (5) qui est disposée de manière radiale dans une première distance (A) par rapport à l'axe longitudinal (L) ;
selon lequel l'arbre (3) peut être déplacé le long de l'axe longitudinal (L) par rapport à l'unité de capteur (5) ;
- un élément de détection (7), lequel est disposé entre l'arbre (3) et l'unité de capteur (5) et lequel est couplé avec l'arbre (3), de manière fixe et radiale, dans une deuxième distance (R) par rapport à l'axe longitudinal (L) ;
selon lequel une face de l'élément de détection (7), laquelle est détournée de l'axe longitudinal (L), est conçue de manière convexe par rapport à un plan qui se trouve à la perpendiculaire de l'axe longitudinal (L), de telle sorte qu'une distance de fente (B) située entre l'élément de détection (7) et l'unité de capteur (5) varie sur une étendue de l'unité de capteur (5) à la perpendiculaire de l'axe longitudinal (L), ce indépendamment d'un angle de basculement (a) de l'arbre (3) ;
- l'unité de capteur (5) est conçue en vue de générer un signal de déplacement de l'arbre, lequel est fonction d'un déplacement de l'élément de détection (7) le long de l'axe longitudinal (L), par rapport à l'unité de capteur (5).

2. Dispositif de capteur (1) selon la revendication 1, pour lequel une courbure de la face de l'élément de détection (7), laquelle est détournée de l'axe longitudinal (L) et laquelle figure dans le plan à la perpendiculaire de l'axe longitudinal (L), est conçue pour l'essentiel à l'identique d'une courbure d'un cercle dans ce plan, dont le rayon correspond à la deuxième distance (R) de l'élément de détection (7) par rapport à l'axe longitudinal (L).

3. Dispositif de capteur (1) selon l'une des revendications précédentes, pour lequel l'élément de détection (7) est conçu sous la forme d'une plaquette.

4. Dispositif de capteur (1) selon l'une des revendications précédentes 1 ou 2, pour lequel l'élément de détection (7) est conçu sous la forme d'une boucle conductrice.

5. Dispositif de capteur (1) selon l'une des revendications précédentes, pour lequel l'unité de capteur (5) comprend une bobine d'excitation (11) et au moins une bobine de réception (13, 15) ;
selon lequel la bobine d'excitation (11) et l'au moins une bobine de réception (13, 15) sont conçues de telle sorte qu'un champ magnétique généré par la bobine d'excitation (11) induit une tension respective dans l'au moins une bobine de réception (13, 15), en fonction du déplacement de l'élément de détection (7) par rapport à l'unité de capteur (5).

6. Dispositif de capteur (1) selon l'une des revendications précédentes 1 à 2, pour lequel :
- l'élément de détection (7) est conçu sous la forme d'un aimant permanent ; et
- l'unité de capteur (5) comprend un capteur à effet Hall, lequel est traversé par un champ magnétique qui est suscité par l'aimant permanent, en fonction du déplacement de l'aimant permanent par rapport à l'unité de capteur (5).

7. Dispositif de capteur (1) selon l'une des revendications précédentes 1 à 2, pour lequel :
- l'élément de détection (7) est conçu sous la forme d'un aimant permanent ; et
- l'unité de capteur (5) comprend un élément de capteur magnéto-résistif, lequel est traversé par un champ magnétique qui est suscité par l'aimant permanent, en fonction du déplacement de l'aimant permanent par rapport à l'unité de capteur (5).

8. Dispositif de capteur (1) selon l'une des revendications précédentes 1 à 2, pour lequel :
- l'élément de détection (7) est conçu sous la forme d'au moins une première électrode d'un condensateur ; et
- l'unité de capteur (5) comprend au moins une deuxième électrode du condensateur.

9. Soupape de recirculation de gaz d'échappement, laquelle est disposée en vue de la commande d'un flux de gaz d'échappement dans la colonne de gaz d'échappement d'un moteur à combustion interne et laquelle comprend :
- une admission ainsi qu'une évacuation ;
- un siège de soupape avec une tête de soupape, laquelle est couplée avec un arbre (3) qui est conçu sous la forme d'une tige de soupape, de telle sorte que sa position par rapport au siège de soupape peut être réglée par un déplacement (T) de l'arbre (3) le long de son axe longitudinal (L) ;
selon laquelle la soupape de recirculation de gaz d'échappement est conçue en vue de piloter le flux de gaz d'échappement de l'admission jusqu'à l'évacuation en fonction de la position de la tête de soupape par rapport au siège de soupape ; et
- un dispositif de capteur (1) selon l'une des revendications précédentes 1 à 8 en vue de la détermination du déplacement (T) de l'arbre (3).
